# EUROPÄISCHE PATENTSCHRIFT

(11) **EP 0 751 187 B1**
(45) Veröffentlichungstag und Bekanntmachung des Hinweises auf die Patenterteilung: **12.09.2001**
(21) Anmeldenummer: 96110144.1
(22) Anmeldetag: 24.06.1996
(51) Int. Cl.: C09B 29/039, C09B 29/09, D06P 1/18, C09B 67/48, C09B 67/10, C09B 41/00

(54) **Nitrobenzisothiazol-Azofarbstoff**
Nitrobenzisothiazol azo dye
Colorant azoique derivé du nitrobenzisothiazole

(30) Priorität: 30.06.1995 DE 19523924
(43) Veröffentlichungstag der Anmeldung: 02.01.1997
(73) Patentinhaber: DyStar Textilfarben GmbH & Co. Deutschland KG, 60318 Frankfurt am Main (DE)
(72) Erfinder: Bühler, Ulrich, Dr., 63755 Alzenau (DE); Kühlwein, Jürgen, Dr., 63150 Heusenstamm (DE); Kruse, Hubert, Dr., 61462 Königstein (DE)

(56) Entgegenhaltungen:
- EP-A- 0 234 474
- EP-A- 0 240 902
- FR-A- 1 568 501
- FR-A- 2 203 855
- FR-A- 2 235 172
- FR-A- 2 304 650
- JP-A- 60 246 885

## Beschreibung

Die vorliegende Erfindung betrifft einen Nitrobenzisothiazol-Azofarbstoff, färbestabile Modifikationen dieses Farbstoffs, Verfahren zu deren Herstellung sowie deren Verwendung zum Färben und Bedrucken von synthetischen Fasermaterialien.

Aus der DE-A 1 644 061 sowie der JP 93 015836 sind bereits Farbstoffe bekannt, die dem erfindungsgemäßen Farbstoff strukturell ähnlich sind.

Es wurde nun allerdings überraschend gefunden, daß der erfindungsgemäße Farbstoff der Formel I 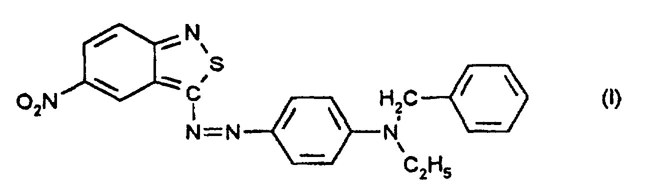 gegenüber diesen bekannten Farbstoffen Vorteile bietet, insbesondere im Hinblick auf sein färberisches Verhalten und seine Gebrauchsechtheiten. Die Vorteile liegen beispielsweise in der Farbstärke, im Aufbau- und Ausziehverhalten nach unterschiedlichen Färbeverfahren und auf unterschiedlichen Substraten, im Egalfärbevermögen, in der pH- und Reduktionsempfindlichkeit, in der Baumwoll-Anschmutzung, in der Lichtechtheit, Thermofixierechtheit und Schweißechtheit.

Der Farbstoff der allgemeinen Formel I ist somit Gegenstand der vorliegenden Erfindung. Er kann in an sich bekannter Weise hergestellt werden, beispielsweise durch Diazotieren von 3-Amino-5-nitrobenzisothiazol-2.1 und Kuppeln auf N-Benzyl-N-ethylanilin.

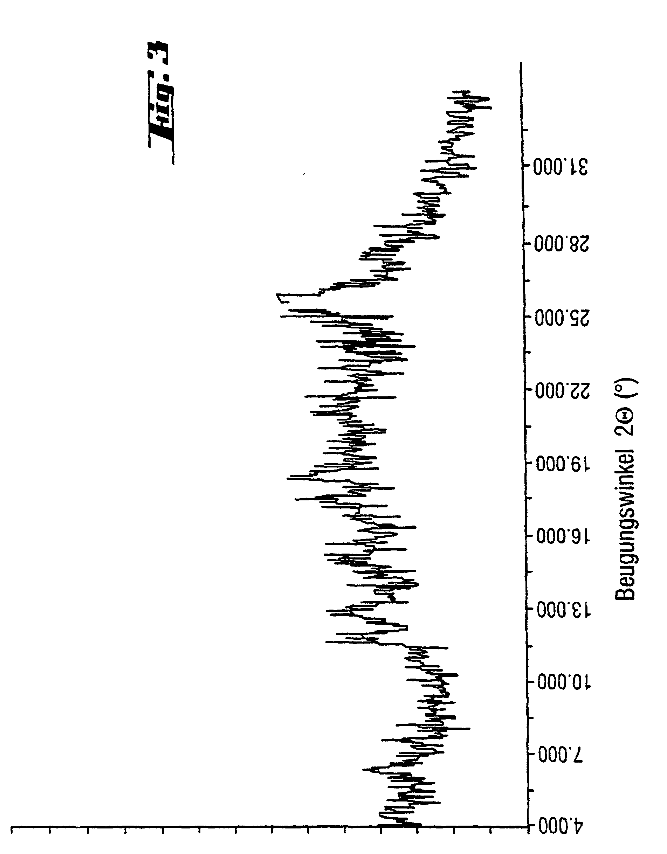

Es wurde festgestellt, daß der Farbstoff der allgemeinen Formel I bei diesem Herstellungsverfahren in einer amorphen Modifikation anfällt, die durch das in Figur 3 wiedergegebene Röntgenbeugungsdiagramm (Cu-K_{α}-Strahlung) gekennzeichnet ist.

Es wurde weiter festgestellt, daß der Farbstoff der Formel I noch in zwei weiteren Kristallmodifikationen vorliegen kann.

Die vorliegende Erfindung betrifft deshalb auch eine Kristallmodifikation des Farbstoffs der Formel I (im folgenden als Modifikation 1 bezeichnet), die im Röntgenbeugungsdiagramm (Cu-K_{α} -Strahlung) Linien folgender Beugungswinkel 2 ⊖ (°) aufweist:

| | |
|---|---|
| Linien starker Intensität | 25,8 |
| Linien mittlerer Intensität | 6,5; 7,6; 9,3; 12,0; 13,0; 15,1; 15,8; 17,5; 18,6; 20,0; 21,9; 24,0; 27,7; 31,0 |

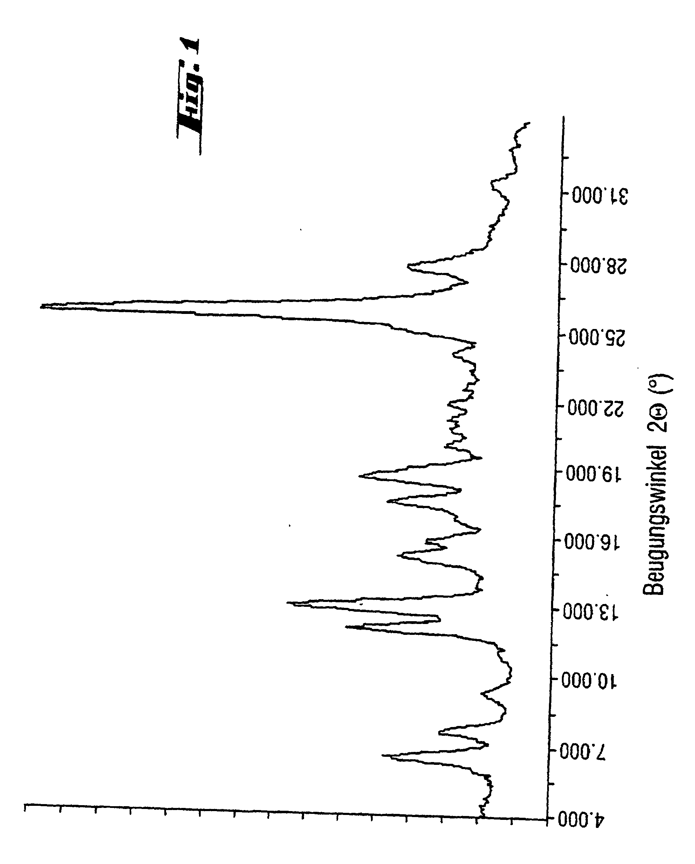

Das vollständige Diagramm ist in Figur 1 abgebildet.

Weiter betrifft die vorliegende Erfindung eine Kristallmodifikation des Farbstoffs der Formel I (im folgenden als Modifikation 2 bezeichnet), die im Röntgenbeugungsdiagramm (Cu-K_{α} -Strahlung) Linien folgender Beugungswinkel 2 ⊖ (°) aufweist:

| | |
|---|---|
| Linien starker Intensität | 12,0; 16,1; 17,0; 20,4; 21,9; 23,7; 26,4; 27,1; |
| Linien mittlerer Intensität | 6,0; 8,1; 9,9; 14,2; 18,5; 23,1; 24,3; 25,1; 28,5; 30,2; 31,1; 32,6; 33,1 |

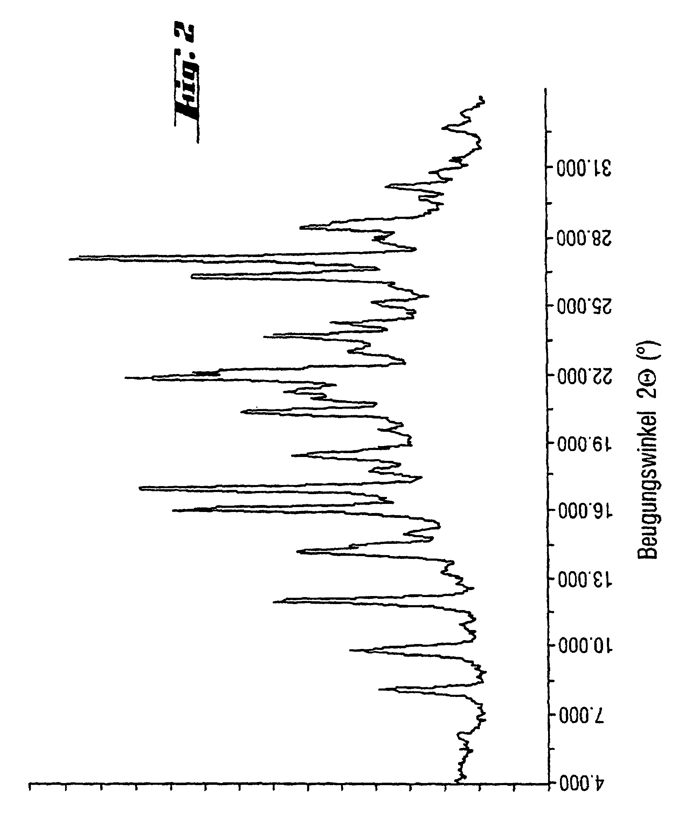

Das vollständige Diagramm ist in Figur 2 abgebildet.

Zur Aufnahme der Röntgenbeugungsdiagramme der Figuren 1 bis 3 wurde ein rechnergesteuertes Siemens D 500-Pulverdiffraktometer benutzt.

Die Modifikation 1 des Farbstoffs der Formel I kann beispielsweise durch Kupplung von diazotiertem 3-Amino-5nitrobenzisothiazol-2.1 auf N-Benzyl-N-ethylanilin in Gegenwart geeigneter Kupplungshilfsmittel erhalten werden.

Geeignete Kupplungshilfsmittel sind beispielsweise Ester aus gegebenenfalls substituierten niederaliphatischen Carbonsäuren und gegebenenfalls substituierten aliphatischen Alkoholen; tertiäre Phosphorsäureester von Fettalkoholen und/oder Fettalkoholpolyethylenglykolethern; tertiäre Phosphorsäureester von Fettalkoholpolyethylenglykolethern und/oder Polyethylenglykolen; Fettalkoholpolyethylenglykolether; Fettsäurepolyethylenglykolester; Tributylphenylpolyethylenglykolether; Nonylphenylpolyethylenglykolether; und Pfropfpolymere auf Basis von Polypropylenglykol und Ethylenoxid.

Als nieder-aliphatische Carbonsäuren werden solche mit bis zu 6 C-Atomen verstanden. Geeignete Ester nieder-aliphatischer Carbonsäuren leiten sich z.B. von aliphatischen Monocarbonsäuren mit 1 bis 6 C-Atomen oder Dicarbonsäuren mit 2 bis 6 C-Atomen und von aliphatischen Alkoholen mit 1 bis 8 C-Atomen ab. Insbesondere besitzen derartige Ester nieder-aliphatischer Carbonsäuren die Formel II

R¹-CO-OR² (II)

worin
R¹ = H, Alkyl mit 1 bis 5 C-Atomen, -(CH₂)ₙCO-OR³,
R², R³ = Alkyl mit 1 bis 8 C-Atomen,
n = 0 bis 4 bedeuten.

Die Reste R² und R³ können gleich oder verschieden sein. Normalerweise sind sie gleich. Die für R¹, R² und/oder R³ stehenden Alkylreste können geradkettig oder verzweigt sein. Geeignete Carbonsäureester sind beispielsweise Ameisensäure-, Essigsäure-, Propionsäure-, Buttersäure-, i-Buttersäure-, Valeriansäure-, i-Valeriansäure-, Capronsäure-, Oxalsäuredi-, Malonsäuredi-, Bernsteinsäuredi-, Glutarsäuredi-, Adipinsäuredi-, -methyl-, -ethyl-, -propyl-, -i-propyl-, -butyl-, -i-butyl-, -sek.butyl-, -pentyl-, i-amyl-, -hexyl-, -heptyl-, -i-octylester.

Bevorzugt sind die Ester der Ameisen-, Essig- und Propionsäure und Ester mit 3 bis 8 C-Atomen. Besonders bevorzugt sind Essigsäure- bzw. Propionsäuremethyl-, -ethyl-, -propyl-, -i-propyl-, -butyl-, -i-butylester.

Selbstverständlich kann auch ein Gemisch aus 2 oder mehr derartiger Carbonsäureester verwendet werden.

Im Rahmen der vorliegenden Erfindung sind unter Fettalkoholen, von denen sich die genannten Kupplungshilfsmittel zum Teil ableiten, bevorzugt C₁₀- bis C₁₈-Alkohole, besonders bevorzugt C₁₄- bis C₁₈-Alkohole, zu verstehen, die auf gesättigte oder ungesättigte, geradkettige oder verzweigte aliphatische Kohlenwasserstoffe zurückgehen, wobei Basis für ein Kupplungshilfsmittel nicht nur ein einzelner Fettalkohol mit bestimmter Kohlenstoffatomzahl sein kann, sondern ebenso ein Gemisch von Alkoholen mit beispielsweise unterschiedlichen Kohlenstoffatomzahlen und/oder unterschiedlichem Sättigungsgrad in beliebigen Mengenverhältnissen. Geeignet als Basis für die erfindungsgemäßen Hilfsmittel sind beispielsweise Laurylalkohol, Myristylalkohol, Palmitylalkohol, Stearylalkohol, der ungesättigte Oleylalkohol, gesättigte Kokosfettalkohole mit 10 bis 18 Kohlenstoffatomen, gesättigte Talgfettalkohole mit 16 bis 18 Kohlenstoffatomen oder ein oleylalkoholhaltiges Gemisch mit 16 bis 18 Kohlenstoffatomen. Im folgenden wird für den gesättigten oder ungesättigten (C₁₀-C₁₈)-Kohlenwasserstoffrest von Fettalkoholen die Bezeichnung R⁰ verwendet, Fettalkohole haben dann also die Formel R⁰OH.

Die Polyethylenglykoleinheiten, die in den genannten Kupplungshilfsmitteln enthalten sind, gehen auf die Polyethylenglykole der Formel H(OCH₂CH₂)ₙOH zurück, aus denen formal durch Veretherung und/oder Veresterung an einer oder beiden Hydroxygruppen die Kupplungshilfsmittel erhalten werden. Bei der technischen Herstellung der Kupplungshilfsmittel wird die Polyethylenglykoleinheit insbesondere durch Umsetzung, z.B. eines Fettalkohols, mit Ethylenoxid eingeführt, wobei die Molzahl Ethylenoxid pro Mol zu oxethylierender Substanz in weiten Grenzen variiert werden kann. Bei der technischen Oxethylierung fallen im allgemeinen Gemische von Substanzen mit unterschiedlichem Oxethylierungsgrad an, und die ein technisches Produkt charakterisierende mittlere Molzahl Ethylenoxid pro Mol zu oxethylierender Substanz ist vielfach auch keine ganze, sondern eine gebrochene Zahl.

Tertiäre Phosphorsäureester von Fettalkoholen und/oder Fettalkoholpolyethylenglykolethern sind Verbindungen der Formel O=P(OR⁴)(OR⁵)(OR⁶), in denen die Reste R⁴, R⁵ und R⁶ gleich oder verschieden sein können. Die zugrunde liegenden Alkohole R⁴OH, R⁵OH und R⁶OH können unabhängig voneinander Fettalkohole der Formel R⁰OH oder Fettalkoholpolyethylenglykolether der Formel R⁰(OCH₂CH₂)ₚOH sein, wobei p bevorzugt eine Zahl von 1 bis 10, besonders bevorzugt eine Zahl von 1 bis 4 ist.

Tertiäre Phosphorsäureester von Fettalkoholpolyethylenglykolethern und/oder Polyethylenglykolen sind Verbindungen der Formel 0=P(OR⁷)(OR⁸)(OR⁹), in denen die Reste R⁷, R⁸ und R⁹ gleich oder verschieden sein können. Die zugrunde liegenden Alkohole R⁷OH, R⁸OH und R⁹OH können unabhängig voneinander Fettalkoholpolyethylenglykolether der Formel R⁰(OCH₂CH₂)_{q}OH oder Polyethylenglykole der Formel H(OCH₂CH₂)ᵣOH sein, wobei q bevorzugt eine Zahl von 1 bis 10, besonders bevorzugt eine Zahl von 1 bis 4 ist und r bevorzugt eine Zahl von 2 bis 15, besonders bevorzugt eine Zahl von 5 bis 10 ist.

Fettalkoholpolyethylenglykolether sind Verbindungen der Formel R⁰(OCH₂CH₂)ₛOH, in der s bevorzugt eine Zahl von 5 bis 50, besonders bevorzugt eine Zahl von 10 bis 30 ist.

Fettsäurepolyethylenglykolester sind Verbindungen der Formel R¹⁰CO(OCH₂CH₂)ₜOH, in der t bevorzugt eine Zahl von 5 bis 50, besonders bevorzugt eine Zahl von 10 bis 30 ist. R¹⁰ ist der gesättigte oder ungesättigte Kohlenwasserstoffrest einer Fettsäure. Bevorzugte Fettsäuren der Formel R¹⁰COOH sind dabei im Rahmen der vorliegenden Erfindung gesättigte oder ungesättigte C₁₀- bis C₂₀-Fettsäuren, besonders bevorzugt sind C₁₆- bis C₁₉-Fettsäuren. Beispiele für geeignete Fettsäuren sind Myristinsäure, Palmitinsäure, Stearinsäure oder Ölsäure sowie ihre Gemische in beliebigen Mengenverhältnissen.

Tributylphenylpolyethylenglykolether sowie Nonylphenylpolyethylenglykolether sind Verbindungen der Formel Ar(OCH₂CH₂)ᵤOH, in der u bevorzugt eine Zahl von 5 bis 50, besonders bevorzugt eine Zahl von 10 bis 30 ist und Ar einen Tributylphenylrest bzw. einen Nonylphenylrest bedeutet. Bei den zugrunde liegenden Alkylphenolen der Formel ArOH handelt es sich im allgemeinen um technische Produkte, die üblicherweise verschiedene Isomere in unterschiedlichen Mengenverhältnissen enthalten.

Propfpolymere auf Basis von Polypropylenglykol und Ethylenoxid sind Verbindungen der Formel

HO[(CH)₂O]ᵥ[CH₂CH(CH₃)O]_{w}[(CH)₂O]ₓH,

in der v + x eine Zahl von 2 bis 100, bevorzugt eine Zahl von 2 bis 50, w eine Zahl von 1 bis 50, bevorzugt eine Zahl von 1 bis 25 und v + w + x eine Zahl von 20 bis 150, bevorzugt eine Zahl von 50 bis 120 ist.

Bevorzugte Kupplungshilfsmittel sind Propfpolymere auf Basis von Polypropylenglykol und Ethylenoxid. Die genannten polymeren Kupplungshilfsmittel können als grenzflächenaktive Stoffe auch durch ihren HLB-Wert (hydrophilic lipophilic balance) charakterisiert werden (siehe z.B. Römpps Chemie-Lexikon, 8. Auflage, Stuttgart 1983, Seite 1715). Die HLB-Werte der einzusetzenden Fettalkoholpolyethylenglykolether, Fettsäurepolyethylenglykolester und Tributylphenyl- sowie Nonylphenylpolyethylenglykolether liegen bevorzugt bei 8 bis 18, die HLB-Werte der einzusetzenden Propfpolymeren auf Basis von Polypropylenglykol und Ethylenoxid liegen bevorzugt bei 4 bis 16.

Bevorzugt finden als Kupplungshilfsmittel auch Mischungen aus den genannten Carbonsäureestern und den genannten Polymeren Verwendung. Besonders bevorzugt sind dabei Mischungen aus den jeweils bevorzugten Kupplungshilfsmitteln.

Die Einsatzmengen der polymeren Kupplungshilfsmittel betragen bevorzugt 0,05 bis 10 Gew.%, besonders bevorzugt 0,5 bis 3 Gew.%, bezogen auf den bei der Kupplung entstehenden Farbstoff (trocken gerechnet).

Die Einsatzmengen der als Kupplungshilfsmittel verwendeten Carbonester betragen bevorzugt 1 bis 30 Gew.%, besonders bevorzugt 2 bis 15 Gew.%, bezogen auf den bei der Kupplung entstehenden Farbstoff (trocken gerechnet).

Die Durchführung der Kupplung zur Herstellung des Farbstoffs der Formel I in der färbestabilen Modifikation 1 erfolgt in an sich bekannter Weise unter den für Kupplungsreaktionen üblichen Bedingungen im wäßrigen Milieu. Zunächst wird die Diazokomponente in üblicher Weise diazotiert, z.B. unter Verwendung eines Alkalimetallnitrits, wie beispielsweise Natriumnitrit oder vorzugsweise Nitrosylschwefelsäure. Die so erhaltene Suspension oder vorzugsweise Lösung der Diazoniumverbindung wird dann mit einer Emulsion oder vorzugsweise sauren Lösung der Kupplungskomponente vereinigt, wobei die Kupplung in Gegenwart eines oder mehrerer der genannten Kupplungshilfsmittel durchgeführt wird. Daneben können bei der Kupplung auch weitere übliche Hilfsmittel zugegen sein, etwa weitere Dispergiermittel, z.B. solche auf Basis von Ligninsulfonaten, oder von Kondensationsprodukten aus Naphthalinsulfonsäure und Formaldehyd.

Vorzugsweise läßt man die Lösung oder Suspension des Diazoniumsalzes in die Lösung oder Emulsion der Kupplungskomponente einlaufen. Aber auch die umgekehrte Arbeitsweise ist möglich, bei der man die Lösung oder Emulsion der Kupplungskomponente in die Lösung oder Suspension des Diazoniumsalzes einlaufen läßt. Bei beiden Arbeitsweisen wird das Kupplungshilfsmittel vorzugsweise vor Beginn der Kupplung der Lösung oder Emulsion der Kupplungskomponente zugefügt. Es kann jedoch auch vor Beginn der Kupplung der Lösung oder Suspension des Diazoniumsalzes oder sowohl der Diazo- als auch Kupplungslösung oder -suspension bzw. -emulsion zugefügt werden. Darüberhinaus kann das Kupplungshilfsmittel aber auch portionsweise oder kontinuierlich während der Kupplung zugefügt werden. Die Kupplungstemperatur liegt im allgemeinen im Bereich von -10 bis 20°C, bevorzugt bei -5 bis 15°C. Bei der Durchführung der Kupplung wird üblicherweise direkt, z.B. durch Zugabe von Eis, oder indirekt gekühlt.

Die Modifikation 2 des Farbstoffs der Formel I kann beispielsweise durch Erhitzen der amorphen Modifikation oder aber der Modifikation 1 in wäßriger Phase auf Temperaturen von vorzugsweise 70 bis 150°C, insbesondere 90 bis 130°C, erhalten werden. In der Regel erfolgt dieses Erhitzen in wäßriger Suspension, zweckmäßigerweise unter Rühren. Liegen die anzuwendenden Temperaturen über dem Siedepunkt der wäßrigen Phase, wird die Umwandlung in die Modifikation 2 in geschlossenen Gefäßen, beispielsweise Autoklaven, ausgeführt. Erhitzt wird so lange, bis die amorphe Modifikation bzw. die Modifikation 1 vollständig in die Modifikation 2 überführt ist.

Die vollständige Überführung nimmt in der Regel 0,5 bis 5 Stunden in Anspruch, wobei eine Reaktionskontrolle durch röntgenographische oder mikroskopische Untersuchung von während der Hitzebehandlung entnommenen Proben erfolgen kann.

Bei der Überführung in die Modifikation 2 kann ein Zusatz einer oder mehrerer oberflächenaktiver Substanzen zu der wäßrigen Phase zweckmäßig sein. Diese oberflächenaktiven Substanzen können benetzend, viskositätsmindernd, dispergierend oder anlösend wirken und anionischer, kationischer oder nichtionischer Natur sein.

Geeignete oberflächenaktive Substanzen sind z.B. Alkalisalze von Ligninsulfonaten, Alkalisalze der Kondensationsprodukte aus Naphthalinsulfonsäuren und Formaldehyd, Polyvinylsulfonate, oxethylierte Novolake, oxethylierte Fettalkohole, Fettsäurepolyglykolester und tertiäre Phosphorsäureester. Die oberflächenaktiven Substanzen können einzeln oder in Kombination miteinander verwendet werden. Die Menge an oberflächenaktiver Substanz, bezogen auf die Menge an Farbstoff der Formel I beträgt in der Regel 0,01 bis 400 Gew.-% und hängt von der Weiterverarbeitung ab.

Die Überführung in die Modifikation 2 durch Wärmebehandlung in wäßriger Phase kann auch unter Zusatz eines oder mehrerer organischer Lösungsmittel erfolgen. Diese organischen Lösungsmittel können entweder mit Wasser in jedem Verhältnis mischbar sein oder sich nicht oder aber nur wenig mit Wasser mischen.

Mit Wasser mischbare Lösungsmittel sind beispielsweise Ethanol, i-Propanol und Dimethylsulfoxid (DMSO). Mit Wasser nicht oder nur wenig mischbare Lösungsmittel sind beispielsweise n-Butanol, Butylacetat und Toluol.

Die Temperaturen für die Hitzebehandlung in wäßriger Phase unter Zusatz von organischen Lösungsmitteln liegen vorzugsweise zwischen 60 und 150°C. In Abhängigkeit von der Temperatur der Hitzebehandlung bzw. des Siedepunkts des zugesetzten organischen Lösungsmittels kann es erforderlich sein, die Hitzebehandlung unter Druck, z.B. in einem Autoklaven, durchzufahren. Die Dauer der Hitzebehandlung richtet sich u.a. nach dem Lösevermögen der flüssigen Phase, also u.a. auch nach dem Lösevermögen des zugesetzten organischen Lösungsmittels und nach dessen Mengenanteil.

Die Menge an organischen Lösungsmitteln, bezogen auf die wäßrige Phase, kann in weiten Grenzen variieren. Bei mit Wasser mischbaren Lösungsmitteln kann sie zwischen 5 und 95 Gew.-%, vorzugsweise zwischen 10 und 50 Gew.-%, liegen. Bei mit Wasser wenig oder nicht mischbaren Lösungsmitteln liegt sie im allgemeinen zwischen 1 und 25 Gew.-%, vorzugsweise bei 2 bis 10 Gew.-%.

Nach der Überführung in die Modifikation 2 wird das organische Lösungsmittel in der Regel durch Destillation oder Wasserdampfdestillation von der Farbstoffsuspension abgetrennt und der Farbstoff aus wäßriger Phase durch Filtration isoliert. Der Farbstoff kann jedoch auch aus dem Lösungsmittelgemisch direkt durch Filtration isoliert werden.

Vorteilhaft ist es, beim Erhitzen des Farbstoffs in wäßriger Phase, sowohl einer rein wäßrigen als auch einer organische Lösungsmittel enthaltenden Phase, den pH-Wert der Wasserphase auf 5 bis 9 einzustellen und bei diesem pH-Wert zu halten, da es sonst zu Farbstärkeverlusten und Farbtonabweichungen kommen kann.

Es ist auch möglich, die Umwandlung der amorphen Modifikation oder der Modifikation 1 in die Modifikation 2 unmittelbar nach der Kupplung durch Wärmebehandlung der Kupplungssuspension auszufahren. Dies kann im gleichen Reaktionsgefäß wie die Kupplung erfolgen. Um eine Verseifung des Farbstoffs zu verhindern, wird dabei vorzugsweise die aus der Diazotierung und Kupplung stammende Mineralsäure zuvor in der Kupplungssuspension gänzlich oder weitgehend neutralisiert.

Nach der Überführung in die Modifikation 2 kann der Farbstoff beispielsweise durch Filtration aus der wäßrigen Suspension isoliert werden. Zur Vermeidung einer Belastung des Abwassers und um Ausbeuteverluste zu vermeiden, werden hierbei in der Regel nur 0,01 bis 10 Gew.-%, vorzugsweise 0,1 bis 1 Gew.-% der oberflächenaktiven Substanzen eingesetzt.

Es ist möglich, den Farbstoff unmittelbar nach der Wärmebehandlung ohne Zwischenisolierung wie unten beschrieben zu finishen, das heißt in die handelsüblichen Pulver- oder Flüssigpräparationen zu überführen. Zu diesem Zweck wird die wärmebehandelte Suspension durch Mahlung in eine Dispersion überführt. Es ist dabei bevorzugt, die Wärmebehandlung in Gegenwart derjenigen Dispergier- und gegebenenfalls auch Hilfsmittel durchzuführen, die in der gefinishten Pulver-oder Flüssigpräparation enthalten sein sollen, oder in Gegenwart eines Teils dieser Mittel. Diese Dispergiermittel sind mit den oben genannten oberflächenaktiven Substanzen identisch. Wurde während der Wärmebehandlung nicht die Gesamtmenge dieser Dispergier-und Hilfsmittel zugesetzt, so wird vor der Mahlung die Restmenge zugegeben. Zur Wärmebehandlung werden in diesem Falle in der Regel 10 bis 400 Gew.-%, vorzugsweise 20 bis 200 Gew.-%, oberflächenaktive Substanzen, bezogen auf den Farbstoff in der amorphen Modifikation oder der Modifikation 1.

Der erfindungsgemäße Farbstoff der Formel I muß nach seiner Herstellung, sei es die amorphe Form, Modifikation 1 oder Modifikation 2, gefinisht werden.

Beim Finish wird der Farbstoff der Formel I durch einen Aufmahlvorgang in eine Dispersion, d.h. in eine flüssige oder pulverförmige Farbstoffpräparation, überführt. Dieses Aufmahlen geschieht in Mühlen, wie z.B. Kugel-, Schwing-, Perl- oder Sandmühlen oder in Knetern. Nach der Aufmahlung liegt die Größe der Farbstoffteilchen bei ca. 0,1 bis 10 gm, vorzugsweise bei ca. 1 gm. Die Aufmahlung erfolgt in Gegenwart von Dispergiermitteln, die nichtionogen oder anionaktiv sein können. Nichtionogene Dispergiermittel sind z.B. Umsetzungsprodukte von Alkylenoxiden, wie z.B. Ethylen-oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkylaryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gew.% und einen Dispergiermittelgehalt bis zu etwa 25 % eingestellt. Aus ökonomischen Gründen werden Farbstoffgehalte von 15 Gew.% meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat. Auch Netzmittel, Frostschutzmittel oder Hydrophilierungsmittel können enthalten sein.

Für gewisse Anwendungsbereiche werden Pulvereinstellungen bevorzugt. Diese Pulver enthalten den Farbstoff, Dispergiermittel und andere Hilfsmittel, wie z.B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Der erfindungsgemäße Farbstoff der Formel I liegt bevorzugt in der Modifikation 1 oder der Modifikation 2 vor und neigt in diesen Formen in pulverförmigen und insbesondere in flüssigen Farbstoffpräparationen nicht zur Agglomeration. Die Modifikationen 1 und 2 in Pulverform benetzen beim Ansetzen von Färbe- und Klotzflotten sowie auch von Druckteigen besser als die amorphe Modifikation und lassen sich rasch und ohne aufwendiges manuelles oder maschinelles Rühren dispergieren. Die Flotten und Druckteige sind homogen und lassen sich in modernen Farbküchen problemlos verarbeiten, ohne die Düsen zu verstopfen.

Die Flüssigpräparationen neigen nicht zur Phasentrennung und insbesondere nicht zur Sedimentation und kittigem Absetzen. Ein ebenfalls aufwendiges Homogenisieren des Farbstoffs im Gebinde vor der Farbstoffentnahme kann somit entfallen.

Der bei der Pulverherstellung nach der Mahlung des Farbstoffs in Gegenwart der Dispergier- und Hilfsmittel anfallende Mahlteig ist auch bei erhöhter Temperatur und über längere Zeit stabil. Der Mahlteig in den Mühlen wie auch nach Verlassen der Mühlen, braucht nicht gekühlt zu werden und läßt sich vor der Sprühtrocknung längere Zeit in Sammelbehältern lagern. Die thermische Stabilität äußert sich auch darin, daß die Sprühtrocknung bei hohen Temperaturen durchgeführt werden kann, ohne daß das zu trocknende Gut agglomeriert. Bei gleicher Trocknerausgangstemperatur bedeutet eine Erhöhung der Eingangstemperatur eine Erhöhung der Trocknerleistung und somit eine Erniedrigung der Fertigungskosten.

Der erfindungsgemäße Farbstoff der Formel I eignet sich sowohl in seiner amorphen Form, als auch insbesondere in Form der Modifikationen 1 oder 2 zum Färben und Bedrucken von Textilmaterialien aus Polyester, wie Polyethylenglykolterephthalat, und/oder Celluloseestern, wie Celluloseacetaten, oder von Mischgeweben aus diesen Materialien und Wolle oder Cellulose.

Die hervorragenden Eigenschaften insbesondere auch der Modifikationen 1 und 2 werden beispielsweise beim Färben aus wäßrigem Färbebad unter modernen Praxisbedingungen deutlich. Diese Bedingungen sind gekennzeichnet durch hohe Wickeldichten bei Kreuzspul- und Baumfärbungen, kurze Flottenverhältnisse, also hohe Farbstoffkonzentrationen, sowie hohe Scherkräfte in der Färbeflotte bedingt durch hohe Pumpenleistungen. Auch unter diesen Bedingungen neigen die Modifikationen 1 und 2 nicht zur Agglomeration, und es kommt nicht zu Abfiltrationen auf den zu färbenden Textilmaterialien. Es werden also homogene Färbungen ohne Farbstärkeunterschiede zwischen den äußeren und den inneren Lagen der Wickelkörper erhalten, und die Färbungen zeigen keinen Abrieb. Bei Klotzfärbungen und Drucken mit den erfindungsgemäßen Modifikationen 1 und 2 schließlich wird ebenfalls ein homogenes, stippenfreies Warenbild erhalten.

Der erfindungsgemäße Farbstoff der Formel I, insbesondere wenn er in den färbestabilen Modifikationen 1 oder 2 vorliegt, eignet sich weiter besonders zum Färben und Bedrucken von alkalisierten Polyesterfasern und Polyester-Mikrofasern. Einzelheiten dazu sind beispielsweise beschrieben in Chemiefasern/Textilindustrie 41./93. Jahrgang, Sept. 1991, S. 1118; Textilveredlung 28 (1993), S. 88, und Textilveredlung 28 (1993), S. 96.

Der erfindungsgemäße Farbstoff der Formel I, insbesondere wenn er in den färbestabilen Modififaktionen 1 oder 2 vorliegt, eignet sich weiter auch besonders zum Färben von Polyesterfasern und Polyesterfasermaterialien im alkalischen Medium bei pH-Werten bis pH 11, insbesondere bei pH 8 bis pH 11, aus wässrigem Färbebad unter HT-Bedingungen. Einzelheiten zu dieser Färbemethode sind beispielsweise in der DE-A 39 38 631, der EP-A 624 683, der EP-A 449 090, der EP-A 540 936, der EP-A 643 107 oder International Dyer, October 1994, S. 34 zu entnehmen.

### Beispiel 1

49 g 3-Amino-5-nitrobenzisothiazol-2.1 werden in 90 ml Monohydrat durch Zutropfen von 80 g einer 41,8%igen Nitrosylschwefelsäure bei 5 bis 10°C in ca. 2 Stunden diazotiert und die Diazolösung zur Vervollständigung der Reaktion bei 10 bis 15°C ca. 5 Stunden nachgerührt. Währenddessen werden 56 g N-Benzyl-N-ethylanilin in 250 ml Wasser durch Zugabe von 20 g konzentrierter Schwefelsäure gelöst und auf 0 bis 5°C abgekühlt. Dann werden 10 g Butylacetat zugesetzt und die obige Diazolösung in ca. 2,5 Stunden bei 0 bis 5°C zugetropft, wobei die Temperatur durch gleichzeitige Zugabe von insgesamt ca. 800 g Eis gehalten wird. Wenn der Farbstoff bei dieser Temperatur in ca. 3 Stunden ausgekuppelt hat, wird er über eine Porzellannutsche abgesaugt, mit Wasser neutral gewaschen und trockengeblasen. Nach Trocknung im Vakuum bis zur Gewichtskonstanz werden 85 g des Farbstoffs der Formel I erhalten, der bei 136 - 8°C schmilzt, sich in o-Dichlorbenzol mit dunkelblauer Farbe löst und in Phthalsäuredimethylester bei 593 nm absorbiert. Er liegt in der Modifikation 1 vor.

### Beispiel 2

50 g des nach Beispiel 1 hergestellten Farbstoffs werden in 250 ml Wasser in Gegenwart von 0.01 g eines anionischen Netzmittels auf Basis Ölsäure in einem Autoklaven 2 Stunden bei 130°C gerührt. Die Farbstoffsuspension wird danach abgekühlt, filtriert und mit Wasser gewaschen. Der Farbstoff liegt nun in der Modifikation 2 vor, die das in Figur 2 wiedergegebene Röntgenbeugungsdiagramm hat.

### Beispiel 3

a) 60 g des nach Beispiel 1 hergestellten Farbstoffs werden mit 140 g eines Natriumligninsulfonates in Gegenwart von 200 g Wasser in einer Sandmühle gemahlen bis 90% der Farbstoffteilchen gleich oder kleiner 1 µm sind. Der so erhaltene Mahlteig wird in einem Sprühtrockner bei einer Eingangstemperatur von 155°C und einer Ausgangstemperatur von 85°C sprühgetrocknet.
b) Wird das so erhaltene Pulver zur Herstellung einer Färbeflotte in Wasser gegeben, so dispergiert es teilweise schon beim Absinken auf den Gefäßboden und vollständig nach kurzem Umrühren.
c) Eine Pulverpräparation, die auf die gleiche Weise wie unter a) angegeben hergestellt wurde, jedoch unter Verwendung von Farbstoff der Formel I, wie er nach den Lehren der DE-A 16 44 061 synthetisiert wird, wird bis zum Erhalt einer homogenen Dispersion mit einem speziellen Rührer längere Zeit gerührt und evtl. anschließend filtriert, um stippenfreie Färbungen zu erhalten.
d) Werden mit der gemäß a) hergestellten Pulverpräparation Kreuzspulen gefärbt, so sind die erhaltenen Färbungen egal und reibecht, d.h. die Farbtiefen in den inneren und äußeren Lagen des Wickelkörpers sind gleich und es kommt nicht zu Farbstoffablagerungen.

### Beispiel 4

a) 100 g des nach Beispiel 2 hergestellten Farbstoffs werden mit 100 g eines Natriumligninsulfonats, 2 g eines Emulgators auf Basis eines Fettalkoholpolyglykolethers und 2 g eines Hydrophilierungsmittels auf Basis eines Dibutylnaphthalinsulfonsäure-Natriumsalzes sowie Wasser in einer Sandmühle gemahlen, bis 90% der Farbstoffteilchen gleich oder kleiner 1 µm sind. Die zugesetzte Wassermenge wurde dabei so berechnet, daß der Farbstoffgehalt in der nach dem Aufmahlen erhaltenen Flüssigpräparation 22% beträgt.
b) Wird die nach a) hergestellte Flüssigpräparation mit einem Druck von ca. 3 kp/m² durch eine Düse aus VA-Stahl mit einem Durchmesser von 0,7 mm gedrückt, so ist ein exaktes, wiederholtes Dosieren möglich.

### Beispiel 5

a) 3 g der Pulverpräparation des Beispiels 3 werden in einem Färbeautoklaven aus einer Färbeflotte bestehend aus 2 1 Wasser, 2 g eines Färbereihilfsmittels auf Basis Formaldehydkondensationsprodukt und 5 g einer Puffersubstanz, die eine Mischung aus einer organischen Phosphorverbindung und einer Polycarbonsäure darstellt, 45 min bei 130°C auf 100 g eines Gewebes aus Polyethylenterephthalat gefärbt, nachdem vorher der pH-Wert der Färbeflotte mit wäßriger Natronlauge auf 10,5 gestellt wurde. Danach wird die Färbung gespült, reduktiv gereinigt, nochmals gespült und getrocknet. Man erhält so eine dunkelblaue Färbung.
b) Die Färbung gemäß a) wird wiederholt, wobei als Puffersubstanz jetzt 4 g Natriumacetat zugesetzt und der pH-Wert der Färbeflotte mit Essigsäure auf 4,5 eingestellt wird. Die resultierende Färbung ist praktisch farbstärke- und farbtongleich, der Farbstoff hat sich somit bei pH 10,5 praktisch nicht zersetzt.

### Beispiel 6

50 g der Flüssigpräparation des Beispiels 4a) werden einer Druckpaste, die 45 g Johannisbrotkernmehl, 6,0 g Natrium-m-nitrobenzolsulfonat und 3,0 g Zitronensäure auf 1000 g enthält, einverleibt. Wird ein Polyestergewebe mit dieser Druckpaste bedruckt, das bedruckte Gewebe nach dem Trocknen 15 Minuten bei 1,5 atü Dampfdruck gedämpft, gespült, geseift, erneut gespült, so erhält man einen farbstarken dunkelblauen Druck von sehr guten coloristischen Eigenschaften.

## Patentansprüche

1. Farbstoff der Formel I

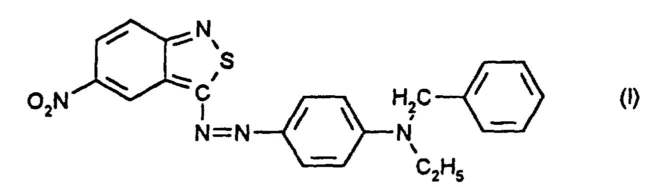

2. Verfahren zur Herstellung des Farbstoffs der Formel I gemäß Anspruch 1, **dadurch gekennzeichnet, daß** 3-Amino-5-nitro-benzisothiazol-2.1 diazotiert und auf N-Benzyl-N-ethylanilin gekuppelt wird.

3. Kristallmodifikation des Farbstoffs der Formel I gemäß Anspruch 1, **dadurch gekennzeichnet, daß** er im Röntgenbeugungsdiagramm (Cu-K_{α}-Strahlung) Linien folgender Beugungswinkel 2 ⊖ (°) aufweist:
| | |
|---|---|
| Linien starker Intensität | 25,8 |
| Linien mittlerer Intensität | 6,5; 7,6; 9,3; 12,0; 13,0; 15,1; 15,8; 17,5; 18,6; 20,0; 21,9; 24,0; 27,7; 31,0 |

4. Verfahren zur Herstellung der Kristallmodifikation gemäß Anspruch 3, **dadurch gekennzeichnet, daß** das Verfahren gemäß Anspruch 2 in Gegenwart eines Kupplungshilfsmittels durchgeführt wird.

5. Verfahren gemäß Anspruch 4, **dadurch gekennzeichnet, daß** als Kupplungshilfsmittel Ester aus gegebenenfalls substituierten Carbonsäuren mit bis zu 6 C-Atomen und gegebenenfalls substituierten aliphatischen Alkoholen; tertiäre Phosphorsäureester von Fettalkoholen und/oder Fettalkoholpolyethylenglykolethern; tertiäre Phosphorsäureester von Fettalkoholpolyethylenglykolethern und/oder Polyethylenglykolen; Fettalkohol polyethylenglykolether; Fettsäurepolyethylenglykolester; Tributylphenylpolyethylenglykolether; Nonylphenylpolyethylenglykolether; oder Pfropfpolymere auf Basis von Polypropylenglykol und Ethylenoxid eingesetzt werden.

6. Kristallmodifikation des Farbstoffs der Formel I gemäß Anspruch 1, **dadurch gekennzeichnet, daß** er im Röntgenbeugungsdiagramm (Cu-K_{α}-Strahlung) Linien folgender Beugungswinkel 2 ⊖ (0) aufweist:
| | |
|---|---|
| Linien starker Intensität | 12,0; 16,1; 17,0; 20,4; 21,9; 23,7; 26,4; 27,1; |
| Linien mittlerer Intensität | 6,0; 8,1; 9,9; 14,2; 18,5; 23,1; 24,3; 25,1; 28,5: 30,2: 31,1; 32,6; 33,1 |

7. Verfahren zur Herstellung der Kristallmodifikation gemäß Anspruch 6, **dadurch gekennzeichnet, daß** der Farbstoff der Formel I in amorpher Form oder in Form der Modifikation gemäß Anspruch 3 in wäßriger Phase auf Temperaturen von 70 bis 150°C erhitzt wird.

8. Verwendung des Farbstoffs der Formel I gemäß Anspruch 1 in amorpher Form oder in Form der Modifikation gemäß Anspruch 3 oder in Form der Modifikation gemäß Anspruch 6 zum Färben und Bedrucken von Textilmaterialien aus Polyester und/oder Celluloseestern oder von Mischgeweben aus diesen Materialien und Wolle oder Cellulose.

## Claims

1. The dyestuff of the formula I

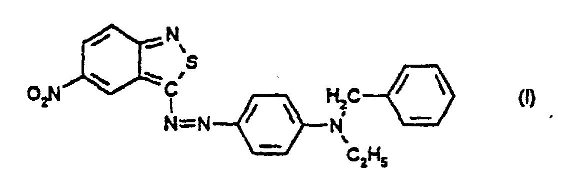

2. A process for the preparation of the dyestuff of the formula I as claimed in claim 1, which comprises diazotizing 3-amino-5-nitro-2,1-benzothiazole and coupling the diazotization product to N-benzyl-N-ethylaniline.

3. A crystal modification of the dyestuff of the formula I as claimed in claim 1, which has lines of the following diffraction angles 2 ⊖ (°) in the X-ray diffraction diagram (Cu-K_{α} radiation):
| | |
|---|---|
| Lines of high intensity | 25.8 |
| Lines of moderate intensity | 6.5; 7.6; 9.3; 12.0; 13.0; 15.1; 15.8; 17.5; 18.6; 20.0; 21.9; 24.0; 27.7; 31.0 |

4. A process for the preparation of the crystal modification as claimed in claim 3, which comprises carrying out the process as claimed in claim 2 in the presence of a coupling auxiliary.

5. The process as claimed in claim 4, wherein the coupling auxiliary employed is an ester of an optionally substituted carboxylic acid having up to 6 carbon atoms and an optionally substituted aliphatic alcohol; a tertiary phosphoric acid ester of a fatty alcohol and/or fatty alcohol polyethylene glycol ether; a tertiary phosphoric acid ester of a fatty alcohol polyethylene glycol ether and/or polyethylene glycol; a fatty alcohol polyethylene glycol ether; a fatty acid polyethylene glycol ester; a tributylphenyl polyethylene glycol ether; a nonylphenyl polyethylene glycol ether; or a graft polymer based on polypropylene glycol and ethylene oxide.

6. A crystal modification of the dyestuff of the formula I as claimed in claim 1, which has lines of the following diffraction angles 2 ⊖ (°) in the X-ray diffraction diagram (Cu-K_{α} radiation):
| | |
|---|---|
| Lines of high intensity | 12.0; 16.1; 17.0; 20.4; |
| | 21.9; 23.7; 26.4; 27.1; |
| Lines of moderate intensity | 6.0; 8.1; 9.9; 14.2; |
| | 18.5; 23.1; 24.3; 25.1; |
| | 28.5; 30.2; 31.1; 32.6; |
| | 33.1 |

7. A process for the preparation of the crystal modification as claimed in claim 6, which comprises heating the dyestuff of the formula I in amorphous form or in the form of the modification as claimed in claim 3 to temperatures of 70 to 150°C in an aqueous phase.

8. The use of the dyestuff of the formula I as claimed in claim 1 in amorphous form or in the form of the modification as claimed in claim 3 or in the form of the modification as claimed in claim 6 for dyeing and printing textile materials of polyester and/or cellulose esters or of blend fabrics of these materials and wool or cellulose.

## Revendications

1. Colorant de formule I

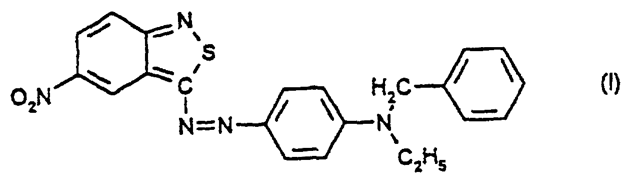

2. Procédé de préparation du colorant de formule I selon la revendication 1, **caractérisé en ce que** le 3-amino-5-nitro-2,1-benzisothiazole est diazoté et couplé à la N-benzyl-N-éthylaniline.

3. Modification cristalline du colorant de formule I selon la revendication 1, **caractérisée en ce qu'**il présente, dans le diagramme de diffraction des rayons X (rayonnement Cu-K_{α}), des raies d'angles de diffraction 2 θ (°) suivants:
| | |
|---|---|
| Raies de forte intensité | 25,8 |
| Raies d'intensité moyenne | 6,5; 7,6; 9,3; 12,0; 13,0; |
| | 15,1; 15,8; 17,5; 18,6; |
| | 20,0; 21,9; 24,0; 27,7; |
| | 31,0 |

4. Procédé de préparation de la modification cristalline selon la revendication 3, **caractérisé en ce que** le procédé selon la revendication 2 est réalisé en présence d'un auxiliare de couplage.

5. Procédé selon la revendication 4, dans lequel on utilise, en tant qu'auxiliaires de couplage, des esters d'acides carboxyliques ayant jusqu'à 6 atomes de carbone, éventuellement substitués, et d'alcools aliphatiques éventuellement substitués; des esters tertiares de l'acide phosphorique et d'alcools gras et/ou d'ethers de polyéthylèneglycol et d'alcool gras; des esters tertiares de l'acide phosphorique et d'ethers de polyéthylèneglycol et d'alcool gras et/ou de polyéthylèneglycols; des ethers de polyéthylèneglycol et d'alcool gras; des esters de polyéthylèneglycol et d'acide gras; des ethers de tributylphénylpolyéthylèneglycol; des ethers de nonylphénylpolyéthylèneglycol; ou des polymères greffés à base de polypropylèneglycol et d'oxyde d'éthylène.

6. Modification cristalline du colorant de formule I selon la revendication 1, **caractérisée en ce qu'**il présente, dans le diagramme de diffraction des rayons X (rayonnement Cu-K_{α}), des raies d'angles de diffraction 2 θ (°) suivants:
| | |
|---|---|
| Raies de forte intensité | 12,0; 16,1; 17,0; 20,4; 21,9; 23,7; 26,4; 27,1; |
| Raies d'intensité moyenne | 6,0; 8,1; 9,9; 14,2 18,5; 23,1; 24,3; 25,1; 28,5; 30,2; 31,1; 32,6; 33,1 |

7. Procédé de préparation de la modification cristalline selon la revendication 6, **caractérisé en ce que** le colorant de formule I est chauffé sous forme amorphe ou sous forme de la modification selon la revendication 3, en phase aqueuse à des températures de 70 à 150°C.

8. Utilisation du colorant de formule I selon la revendication 1 sous forme amorphe ou sous forme de la modification selon la revendication 3 ou sous forme de la modification selon la revendication 6, pour la teinture et l'impression de matières textiles en polyester et/ou en esters de cellulose, ou de tissus mixtes à base de ces matières et de laine ou de cellulose.
